# EUROPEAN PATENT APPLICATION

(11) **EP 1 281 441 A2**
(43) Date of publication of application: **05.02.2003**
(21) Application number: 02255410.9
(22) Date of filing: 01.08.2002
(51) Int. Cl.: B01L 3/02, G01N 35/10

(54) **Liquid ejection device and sample carrier preparation apparatus**

(30) Priority: 01.08.2001 JP 2001233579
(71) Applicant: CANON KABUSHIKI KAISHA, Tokyo (JP)
(72) Inventor: Inoue, Takashi, c/o Canon Kabushiki Kaisha, Tokyo (JP)
(74) Representative: Beresford, Keith Denis Lewis

(57) **Abstract**

A liquid ejection device (1) comprises a flow path having an ejection orifice (2) and a pressure chamber (5) communicating with each other; a pressure control assembly (6) for changing the gas pressure in the pressure chamber; and an ejection energy-generating element (4) for giving the energy for ejection of a liquid in the flow path through the orifice to the liquid, wherein the liquid is introduced through the ejection orifice into the flow path by depressurizing the pressure chamber by the pressure control assembly. A carrier preparation apparatus comprises the liquid ejection device; a first driving assembly for driving the pressure control assembly; a second driving assembly for driving the ejection energy-generating element; a liquid holding portion (23) for holding the liquid containing a sample; a carrier holding member for holding a carrier for fixing the sample; a moving means (22) for moving the ejection orifice in positional relation to the liquid holding portion and the carrier holding member; and a position control assembly for deciding the position of the ejection orifice in the relative movement.

## Description

### BACKGROUND OF THE INVENTION

### Field of the Invention

The present invention relates to a liquid-ejection device which ejects fine droplets of a liquid sample containing a component participating in
an intended reaction. This liquid ejection device is useful for preparing a sample carrier which has a fine precise matrix of spots of the aforementioned sample. The main uses of the liquid ejection device include apparatuses for preparing a sample carrier in which spots of a sample containing a probe for DNA analysis, DNA diagnosis, or the like are arranged on a carrier.

### Related Background Art

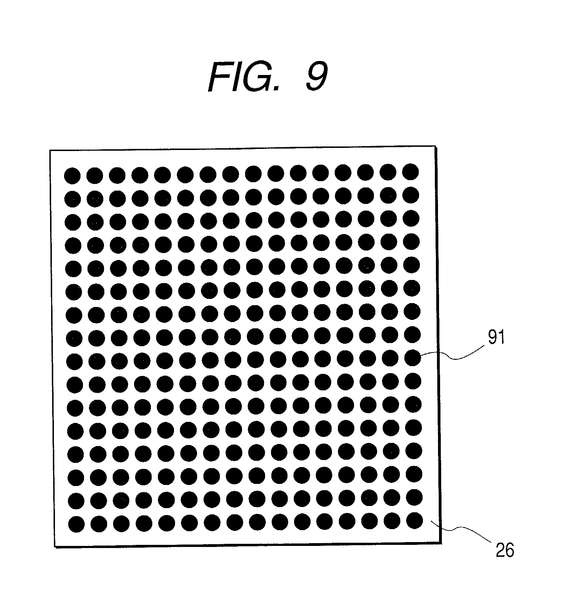

Researches are being made for analysis of DNAs affecting the diseases caused by gene mutation, and for diagnosis of the diseases. An effective method for analysis of DNA is use of a reaction chip as shown in Fig. 9 called generally a DNA chip. In the DNA chip, spots 91 of several thousands to several tens of thousands of kinds of DNA fragments (DNA probes) having decoded sequences are arranged without overlap in a matrix at intervals of several hundreds of microns (µm) or less on a carrier (supporting base member) 26 such as a slide glass plate or a silicon chip of usually 1-3 cm square.

On dropping a specimen containing biological cell-derived DNAs labeled with a fluorescent dye onto such a DNA chip, the labeled DNA hybridizes with the DNA probe having a complementary sequence on the DNA chip. On projecting an exciting light onto the DNA chip, only the fluorescent dye-labeled sites emit fluorescence. Therefore, the DNA sequence in the specimen can be elucidated by detecting the fluorescence by a photodetector and identifying the DNA probe corresponding to the fluorescence-emitting sites.

The methods for preparing such a DNA chip generally include Method I in which the DNA probes are synthesized and purified on a carrier by a photolithography technique employed in semiconductor industries; and Method II in which preliminarily synthesized DNA probes are spotted onto a carrier to bond the DNA probe to the carrier.

Method I for preparing the DNA chip requires a high-degree and large-scale installation, and is known to involve an intricate process for purification of the DNA probe on the carrier. Since the accuracy of detection of DNA in the specimen depends largely on the degree of purification of the DNA probe, this method should be further improved for preparation of a high-quality DNA chip.

Method II is a method improved to solve the problems in the above Method I. In Method II, the DNA probes are preliminarily synthesized, whereby the DNA probes can readily be purified and the resulting DNA chip contains high-quality DNA probes.

Method II for preparing the DNA chip has problems below.

A first problem in Method II arises in high-density spotting of the DNA probes on the carrier. Usually the amount of the specimen collected from a test object is very small. To obtain DNA information maximally, possible largest number of kinds of DNA probes (usually several thousands to several ten thousands of kinds), should be spotted at intervals of several hundred micrometers or less in a matrix on a carrier of about 1 to 3 cm square.

A second problem in Method II arises in application of the sample containing the DNA probes with uniform dot sizes with repeatability. For quantitative analysis, the sizes of the spots of the DNA probes should be nearly constant.

A spotting method is disclosed which employs an ink-jet technique to solve the above first and second problems (Japanese Patent Application Laid-Open No. 11-187900).

A third problem in Method II arises in filling a sample solution containing the DNA probes into a coating means. In the method, tens of thousands of kinds of DNA probes should be filled readily into the application means. This requires reservoirs for reserving the several tens of thousands of DNA probe solutions; devices for ejecting and applying the DNA probe solutions respectively from the reservoirs (e.g., nozzles and pins), and feeding tubes connecting directly the reservoirs and the applying means. However, to provide the applying means for the enormous number of the respective probes in one-to-one correspondence, the apparatus becomes necessarily large and complicated. To avoid this problem, one applying means is switched effectively successively for application of several kinds of the DNA probes. In such a switching drive, the one applying means should be washed every time after application of a DNA probe onto a carrier before filling another DNA probe into the applying means for the reliability of the apparatus and the product, which makes the operation complicated.

### SUMMARY OF THE INVENTION

The present invention intends to provide a liquid ejection device having a simple structure and suitable for effective preparation of a carrier having a deposited sample containing a component participating in an intended reaction like a DNA probe, for example, probe arrays and reaction chips. The present invention intends also to provide an apparatus and a process for preparation of the sample carrier employing the above liquid ejection device.

The present invention intends further to provide a small-sized reliable liquid ejection device capable of spotting small amounts but many kinds of liquids on a carrier precisely without spot overlapping. The small amounts but many kinds of liquids include aqueous solutions of water-soluble reactive substances typified by DNA probes.

The liquid ejection device of the present invention comprises a flow path having an ejection orifice and a pressure chamber communicating with each other; a pressure control assembly for changing the gas pressure in the pressure chamber; and an ejection energy-generating element for giving the energy for ejection of a liquid in the flow path through the orifice to the liquid, wherein the liquid is introduced through the ejection orifice into the flow path by depressurizing the pressure chamber by the pressure control assembly.

This device has preferably a chamber for holding the liquid near the ejection orifice, and the energy is applied to the liquid held in the chamber.

In this device, the ejection orifice has an orifice diameter ranging preferably from 10 to 80 µm.

This device has a maximum volume for holding the liquid, ranging preferably from 1 to 1000 nL. The inside wall and the outside wall of the ejection orifice has preferably water-repellency.

The pressure control assembly preferably utilizes changes of the gas pressure in the pressure chamber by heating. Specifically a heater is preferably driven by an electric pulse.

The pressure control assembly may utilize a Peltier element driven by electric pulse.

The energy utilized for the liquid ejection is suitably thermal energy, and the ejection energy-generating element may be a heater driven by an electric pulse.

The carrier preparation apparatus of the present invention comprises a liquid ejection device of the above-mentioned constitution; a first driving assembly for driving the pressure control assembly; a second driving assembly for driving the ejection energy-generating element; a liquid holding portion for holding the liquid containing a sample; a carrier holding member for holding a carrier for fixing the sample; a moving means for moving the ejection orifice in positional relation to the liquid holding portion and the carrier holding member; and a position control assembly for deciding the position of the ejection orifice in the relative movement.

The process for preparing a sample carrier of the present invention employs a liquid ejection device having the aforementioned constitution, and comprises filling the liquid containing a sample into the flow path by bringing the ejection orifice into contact with the liquid containing the sample; moving the ejection orifice in positional relation to the carrier for fixing the sample to decide the position of the ejection orifice; and ejecting the liquid containing the sample from the ejection orifice onto the prescribed position of the carrier to deposit the sample on the carrier.

### BRIEF DESCRIPTION OF THE DRAWINGS

Fig. 1A and Fig. 1B illustrate schematically a liquid ejection device employed in Example 1 of the present invention.
Fig. 2 illustrates schematically an apparatus for preparing a sample carrier in Example 1 of the present invention.
Figs. 3A, 3B, 3C, 3D, 3E, 3F, 3G and 3H are sectional views for explaining the operation of the liquid ejection device of Example 1.
Fig. 4 illustrates schematically a liquid ejection device employed in Example 2 of the present invention.
Fig. 5 is an enlarged perspective view of a liquid ejection device of the reaction chip preparation apparatus in Example 3.
Fig. 6 illustrates schematically a multiple liquid ejection device.
Figs. 7A, 7B, 7C, 7D and 7E illustrate schematically operation of the multiple-liquid ejection device.
Fig. 8 shows a method of controlling the liquid ejection.
Fig. 9 is a plan view of a reaction chip.

### DESCRIPTION OF THE PREFERRED EMBODIMENTS

The sample carrier in the present invention is constituted to carry samples containing a component participating in an intended reaction. For example, a liquid containing a sample is applied in a spot onto a prescribed position on a carrier and post-treated if necessary for drying or a like treatment to form a spot containing the sample on the carrier. The sample may be a known substance such as a reagent, or may be a specimen containing an unknown substance to be tested.

An example of the sample carrier is a probe carrier in which a probe is the component participating in an intended reaction. The probe carrier includes DNA microarrays, DNA chips, and plates and chips for inspection called generally a probe array. The probe array is a probe carrier comprised of an array of probes arranged at prescribed intervals on a carrier. The probe carried by the probe carrier (hereinafter simply referred to as a "probe") is a substance which can be recognized specifically by a specific target. The probe substances include oligonucleotides, polynucleotides, and other polymers. The probe may be a substance capable of bonding to a target as a part of ligand-antiligand. The probes and the targets include naturally-occurring bases, and analogous substances.

An example of the target is a nucleic acid. For the nucleic acid as the target, the probe is a single-stranded nucleic acid having a base sequence complementary to the entire or a part of the target nucleic acid, and hybridizes specifically with the target nucleic acid.

The probe is suitably selected to meet the purpose. Suitable probe materials include DNA, RNA, cDNA (complementary DNA), PNA, oligonucleotides, polynucleotides, other nucleic acids, oligopeptides, polypeptides, proteins, enzymes, enzyme substrates, antibodies, epitopes for the antibodies, antigens, hormones, hormone receptors, ligands, ligand receptors, oligosaccharides, and polysaccharides.

Incidentally in the present invention, the term "probe" signifies a single molecule itself serving as the aforementioned probe, or a molecular assemblage of one or plural probe molecules fixed in one plot on the carrier surface, according to the context.

The probe has preferably a structure capable of bonding to the carrier surface, and bonds preferably through this bondable structure to the carrier surface. The structure bondable to the carrier surface includes the following organic functional groups: amino, sulfhydryl, carboxyl, hydroxyl, halogenocarbonyl (haloformyl: -COX), halo (-X), aziridino, maleimido, succinimido, isothiocyanato, clorosulfonyl (-SO₂Cl), aldehydo (formyl: -CHO), hydrazino, and iodoacetamido. The structure bondable to the carrier surface is preferably formed by introduction of at least one of the aforementioned organic functional groups.

For the probe having a structure bondable to a surface of the carrier, the surface of the carrier may be treated to be suitable for the bondable structure.

An embodiment of the present invention is described below taking a process of preparing a DNA chip as an example. In the examples below of the present invention, the sample-containing liquid is a probe solution. The liquid formulation for preparing the probe solution may be an aqueous solution of a water-soluble reactive substance which is useful for ink-jet recording, as mentioned specifically below. Any liquid formulation may be used in the liquid ejection device of the present invention explained in detail in Examples, provided that the liquid formulation can be ejected as fine liquid droplets by an ink-jet technique and the reactive substance in the liquid droplets is scarcely damaged by the ejection. Thus, the liquid ejection device of the present invention can serve as an apparatus for reactive chip preparation having many kinds of reactive solutions deposited in integration on the surface.

For ejection of the liquid droplets, the liquid formulation has preferably a viscosity ranging from 1 to 15 cps, and a surface tension not lower than 30 dyn/cm. More preferably, the viscosity ranges from 1 to 5 cps, and the surface tension ranges from 30 to 50 dyn/cm for positional precision of the droplet deposition.

For stability of the liquid ejection and stability of DNA probe in the ejection by ink-jet technique, the liquid formulation contains a DNA probe of preferably 2-mer to 5000-mer, more preferably from 2-mer to 60-mer, at a concentration preferably ranging from 0.05 to 500 µM, more preferably from 2 to 50 µM.

The composition of the liquid formulation is not specially limited, provided that it does not substantially affect the DNA probe in mixing and ejection with the DNA probe and can be ejected normally. The preferred liquid formulation includes liquids containing glycerin, urea, thiodiglycol, ethylene glycol, isopropyl alcohol, or acetylene alcohol. More specifically, a liquid formulation is preferred which contains 5 to 10 mass% of urea, 5 to 10 mass% of glycerin, 5 to 10 mass% of thiodiglycol, or 0.02 to 5 mass%, more preferably 0.5 to 1 mass%, of acetylene alcohol.

Japanese Patent Application Laid-open No. 11-187900 discloses a method for bonding a DNA probe to a surface of a recording medium by bonding a functional group reactive to both the DNA probe and the surface of the recording medium to them so as to fix to a surface of a recording medium a spot of a liquid formation fulfilling conditions of general use in ink-jet process, to prevent effectively contaminations with adjacent spots, and to bind strongly the DNA probe to the surface of the recording medium. By ejection of the liquid formulation (containing, for example, an -SH group) to a carrier surface (containing, for example, a maleimido group), both of which were treated by this method, at an ejection gap of 1 to 2 mm by an ink-jet technique, deterioration of the liquid formulation deposited onto the carrier is negligible, the formed spots are nearly circular, and the connection of the adjacent spots is effectively prevented even at high density spotting at a center-to-center distance of about 100 µm. Thereafter, the fixing reaction between the liquid formulation and the carrier surface is accelerated to complete the fixation, and the unreacted liquid formulation is washed off to obtain a reaction chip.

The liquid ejection device of the present invention which satisfies the above requirements is explained in detail by reference to drawings. The present invention is not limited to that explained below, and includes devices which utilize a part of the characteristic functions of the device explained below.

### (Example 1)

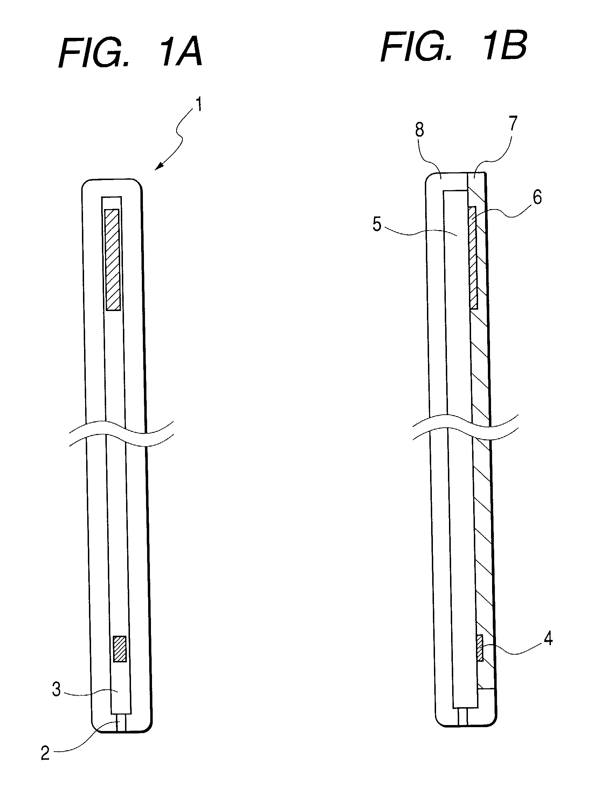

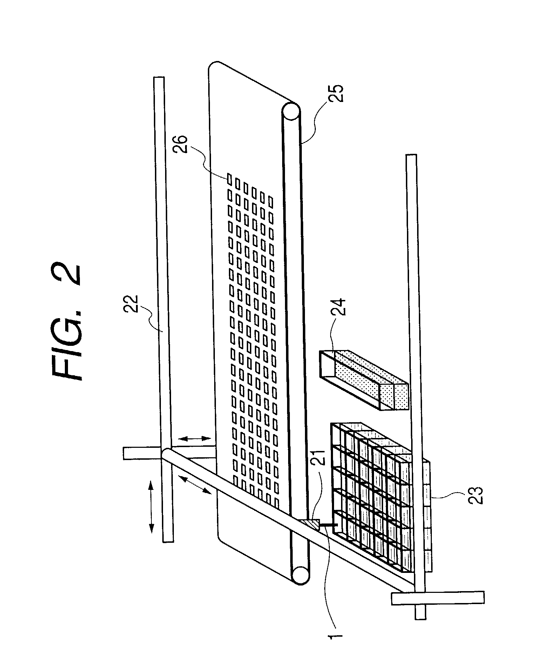

Fig. 1A and Fig. 1B illustrate schematically liquid ejection device 1 employed in this Example. Fig. 1A is a front view, and Fig. 1B is a side view. Fig. 2 illustrates schematically a reaction chip preparation system utilizing the liquid ejection device of the present invention.

The liquid ejection device of this example comprises a container in a slender tube shape forming a flow path as shown in Figs. 1A and 1B. This container may be constituted of base plate 7 (hereinafter referred to a "flow path base plate") on which a pressure-controlling assembly 6 and an ejection energy-generating element 4 were previously provided, and another part 8. The part excluding the flow path base plate is called a flow path-constructing main material. One end of the tubular container is open and the other end is closed to keep air-tightness. The liquid ejection device of the present invention has such a basic shape of slender tubular container. The drawing omits the electrodes and other accessories outside the liquid ejection device for driving and controlling the ejection energy-generating element and pressure-controlling assembly.

The opening of the container corresponds to ejection orifice 2, and serves not only as the ejection orifice but also as an introduction orifice for sucking a solution from the outside into the flow path. The ejection orifice may be formed in the flow path base plate rather than the flow path-constructing main material depending on the shape of the flow path base plate.

The portion of the flow path distant from the ejection orifice constitutes pressure chamber 5. A heater as pressure-controlling assembly 6 for changing the gas pressure in the flow path is provided on a part of the wall constructed of the flow path base plate. On applying electric current through the heater of the pressure-controlling means, the gas in the pressure chamber is heated and expands. On stopping the electric current through the heater, the heat of the gas is released outside to cool the gas and cause gas constriction. The cooling of the gas is conducted more simply by heat release than by electric control. For the heat control, a Peltier element may be provided near the heater. The pressure in the flow path can be increased or decreased by expansion or constriction of the gas in the pressure chamber. The pressure-controlling means working in such a manner is called a pressurizing-depressurizing means. By controlling the pressurizing-depressurizing means according to the procedure shown detailedly below, the solution can be filled into, or discharged from, the flow path. In other constitution, the solution may be introduced into the flow path by expanding or constricting physically the pressure chamber by employing a piezo element in place of the heater.

The part of the flow path near the inside wall of the ejection orifice constitutes chamber 3 for holding the solution introduced therein. On a part of the chamber wall constructed of the flow path base plate, there is provided a heater serving as an ejection energy-generating element 4 which is an ejection energy-generating means (hereinafter simply referred to as an "ejection means"). The heater as the ejection means generates heat quickly on application of a pulse current to cause an abrupt phase change locally in the contacting solution. The pressure of the generated bubble causes ejection at the ejection orifice of a fine droplet of the solution from the inside of the flow path. With such a constitution, the amount of the ejected solution can be controlled within the range of 2 to 80 pL by the heater area, the inputted energy, the sectional area of the ejection orifice, the sectional area of the flow path, the distance between the ejection orifice and the heater, and other factors. Therefore, such a construction of this Example is highly effective as a means for spotting the solution in a high spot density. For example, for arranging the deposited liquid droplets at center-to-center intervals of not more than 100 µm, the volume of the liquid droplet in one ejection ranges preferably from 2 to 8 pL to prevent overlap between the neighboring deposited spots. In the constitution of this example, the volume of the solution to be filled into the chamber is very small advantageously. For example, when the ejection orifice has an aperture of 10 to 30 µm, the total flow path volume in the range from about 1 to about 10 nL is sufficient.

Fig. 2 illustrates an example of an apparatus for preparing a sample carrier of the present invention. Since the sample carrier to be prepared in this Example is a reaction chip, the apparatus shown in Fig. 2 is called a reaction chip preparation apparatus. This reaction chip preparation apparatus is explained below. The liquid ejection device shown in Figs. 1A and 1B is mounted on carriage 21 movable precisely in xyz directions. This reaction chip preparation apparatus comprises liquid ejection device 1; carriage 21; a carriage driving mechanism (xyz linear servomechanism 22 in Fig. 2); reservoir 23 for holding a solution containing a preliminarily synthesized probe (herein after referred to as a "probe solution"); waste liquid pot 24 for receiving a excess of the probe solution; a delivery mechanism (delivery belt 25 in Fig. 2) for delivering the carrier 26; a controlling means (not shown in the drawing) for controlling the drive of the liquid ejection device, the movement of the carriage, and the delivery of the chip interconnectedly.

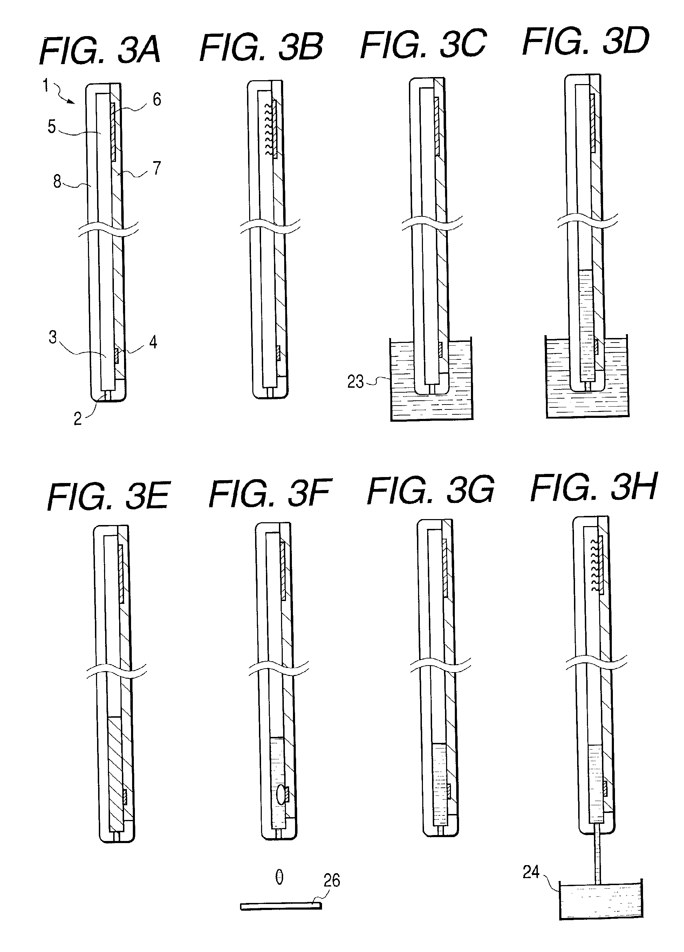

The operation of the liquid ejection device of the present invention is described regarding the introduction of the liquid into the flow path by reference to Figs. 3A to 3H.
(1) The liquid ejection device is moved just above the probe solution reservoir, or the reservoir is moved just below the liquid ejection device (Fig. 3A).
(2) The air in the pressure chamber is heated to expand by a heater of the pressurizing-depressurizing means provided in the pressure chamber (Fig. 3B).
(3) The ejection orifice is immersed in the probe solution in reservoir 23 by moving the liquid ejection device downward or the reservoir upward (Fig. 3C).
(4) The air in the pressure chamber is cooled to constrict by natural cooling (heat radiation) or forced cooling by a Peltier element or a like means. Simultaneously with the constriction of the air, the probe solution is introduced from the reservoir through the ejection orifice into the chamber in a required amount (Fig. 3D).
(5) The liquid ejection device is moved upward or the reservoir is moved downward to separate the ejection orifice from the probe solution in the reservoir (Fig. 3E).
(6) The liquid ejection device or the carrier is moved to enable ejection of the fine liquid droplet from the liquid ejection device onto a prescribed position on the carrier (Fig. 3E).
(7) The heater of the ejection means provided on a part of the inside wall of the chamber is actuated quickly to cause phase change in the part of the probe solution in contact with the heater, and the probe solution is ejected by the pressure of a generated bubble in a fine droplet through the ejection orifice to deposit a prescribed position on carrier 26 (Fig. 3F).
(8) The liquid ejection device is moved just above the waste liquid pot, or the waste liquid pot is moved just below the liquid ejection device (Fig. 3G).
(9) The air in the pressure chamber is expanded by actuating the heater of the pressurizing-depressurizing means to discharge any remaining probe solution into the waste probe solution pot 24 (Fig. 3H).
(10) Another probe solution is introduced to the flow path by repeating the above step (1). That is, as in the above step (1), the liquid ejection device is moved just above another probe solution reservoir, or the reservoir is moved just below the liquid ejection device (Fig. 3A).

In repeating the above steps (1) to (9) by introducing a different sample solution into the flow path, the remaining of the sample solution after the previous step may be undesirable in view of the reliability. The amount of the solution remaining in the flow path after discharge of the probe solution in the previous steps can be decreased to be negligible by imparting water repellency to the inside wall and the outside wall near the ejection orifice. For achieving 100%-reliability of the test results, the inside of the flow path is washed by providing a washing liquid reservoir and conducting the operation corresponding to the above steps (1) to (9). If no problem is caused by reuse of the probe solution remaining in the device, the solution may be returned to the reservoir.

In the case where the probe solution remaining in the flow path is applied successively onto carriers after the above step (7), a pressurizing-depressurizing means, an ejection means, and moving means for the carrier or the liquid ejection device are set so as to conduct the operations similar to that of a continuous type ink-jet recording as described below.

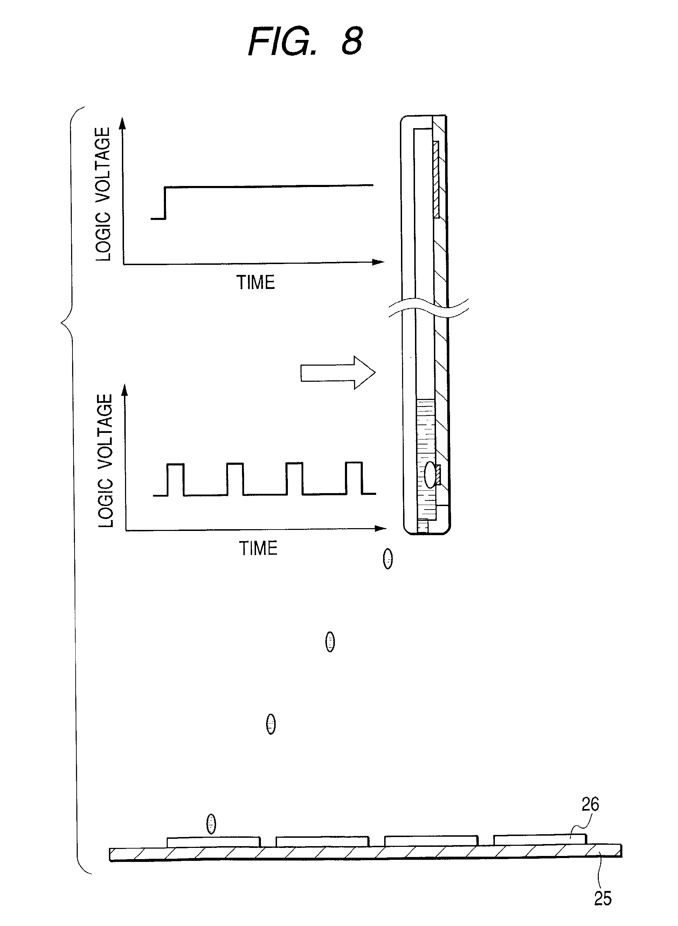

In order to realize the successive application of the solution onto a plurality of carriers, the pressure chamber after the solution was filled into the flow path in step (4) may be additionally pressurized by the pressurizing-depressurizing means before step (7) in the first cycle, or the flow path is additionally pressurized by the pressurizing-depressurizing means after the applications to several carriers so as to keep the pressure of the flow path at a suitable level during the following successive applications of the solution. The liquid ejection means is actuated at a constant frequency at constant time intervals to eject fine liquid droplets. The liquid ejection device and/or the rows of carriers 26 are moved precisely in consideration of the driving frequency to allow the ejected fine liquid droplets to deposit the prescribed positions on the respective carriers (Fig. 8). Waveforms in Fig. 8 schematically illustrate changes with the passage of time of logic voltages when pressurizing-depressurizing means and the liqid ejection means are actuated, respectively. The upper linear logic waveform is for the pressurizing-depressurizing means, and the lower rectangular waveform is for the liquid ejection means. When energizing the pressurizing-depressurizing means with the upper logic wavefrom, the pressure chamber is pressurized, whereby the solution is ejected continuously from the ejection orifice, which is so-called as "continuous jet". The resultant continuous flow of the solution is chopped by each of bubbles generated by the ejection energy-generating element as the liquid ejection means which is actuated in accordance with the lower logic waveform. As a result, droplets of the solution are formed. In Fig. 8, four droplets of the solution correspond to four rectangular wave portions of the lower logic waveform in order. If only the ejection energy-generating element was actuated, the chamber would not be supplied with the solution and the device could not eject the solution. Accordingly, it is necessary for supplying the solution to the chamber near the ejection orifice to actuate the pressurizing-depressurizing means simultanelusly to pressurize the chamber.

### (Example 2)

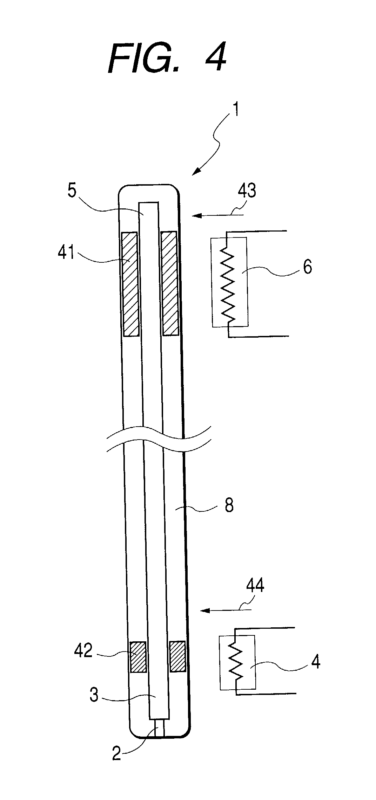

Fig. 4 illustrates schematically the liquid ejection device of this Example. In this device, the heater of pressurizing-depressurizing means 6 and the heater of ejecting means 4 are provided outside the liquid ejection device, and the heat-conductive portions 41, 42 of the flow path-constituting main material 8 for transferring the heat from the heater is formed from a material having a high thermal conductivity such as silicon and metals.

For actuating the above portions, for example, the corresponding external heater is moved in the direction of arrow 43 or 44 in the drawing to bring the heater into contact with the flow path to transfer the heat from the heater to the inside of the flow path.

The liquid ejection device of this Example does not employ a complicated circuit for constituting a pressure control assembly and an ejection energy-generating element on the flow path-constituting member such as a flow path base plate. In other words, a flow path base plate which serves solely to provide such complicated circuits is uncecessary for the liquid ejection device of this example. Therefore, the flow path can be formed more readily than the one of Example 1. Since the production cost for one liquid ejection device is lower, the device may be thrown away after one introduction of the solution into the flow path. When the device is used disposably, the water repellency need not be imparted to the inside wall and the outside wall near the ejection orifice, and the steps (8') and (9') below are conducted in place of the steps (8) and (9) in Example 1.
(8') The liquid ejection device is detached from the carriage.
(9') A new liquid ejection device is attached to the carriage.

### (Example 3)

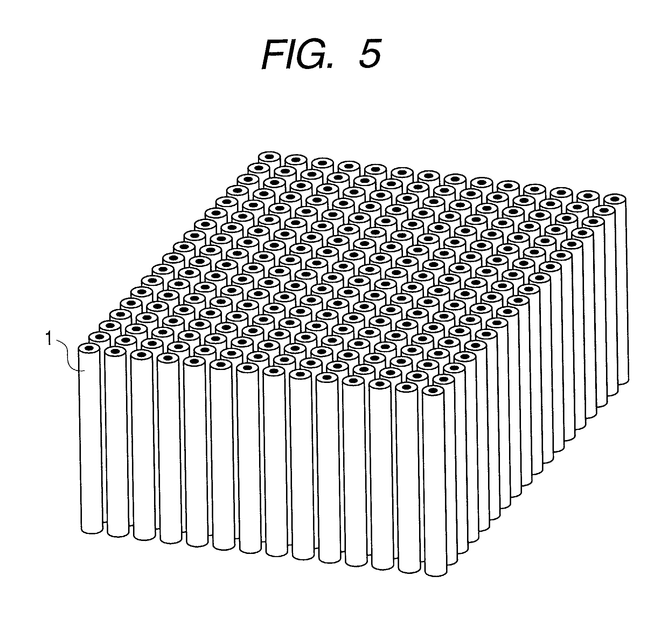

In the sample preparation apparatus of this Example, the liquid ejection devices of Example 1 or 2 are employed in plurality. The series of operation steps described in Example 1 or 2 may be conducted concurrently, or may be conducted with the devices grouped and with the steps delayed successively for the groups to improve the operation efficiency of the sample preparation apparatus. The plural pressurizing-depressurizing means, which are electrically driven heaters, are designed and installed such that the respective heaters are driven independently. Fig. 5 shows an example of arrangement of plural liquid ejection devices 1 in a matrix. In the matrix of the liquid ejection devices, heaters are also arranged in matrix, and the electric design and the installation thereof correspond to the matrix.

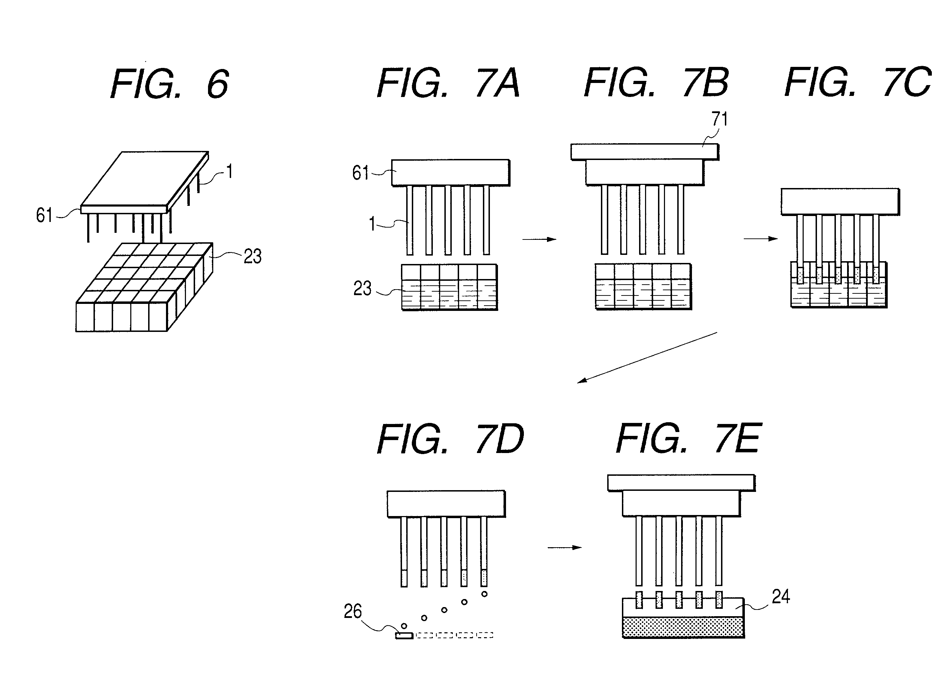

A construction in which sample solutions are introduced simultaneously into an assemblage of liquid ejection devices arranged in a matrix is explained, as an example, by reference to Fig. 6 and Figs. 7A to 7E. Plural solution reservoirs 23 are arranged in correspondence with the matrix of liquid ejection devices 1 as shown in Fig. 6. For pressurizing the insides of the pressure chambers simultaneously, the pressure chambers to be pressurized are brought into contact with heat transfer material 61. This heat transfer material suitably serves also as the holder of the liquid ejection devices. Fig. 7A is a side view of the device construction of Fig. 6. A heated material 71 is pushed against the heat transfer material to expand the air in the pressure chamber (Fig. 7B). In this Example, the heat transfer material is made of a silicone rubber. The matrix of ejection orifices is brought into contact with the matrix of the solution reservoirs, and the sample solutions are filled into the respective flow path of the liquid ejection devices (Fig. 7C). After application of the sample solutions onto the carrier by actuating the ejection energy-generating element (Fig. 7D), the remaining excess sample solutions in the flow path are discharged in the same manner as in filling of the sample solution (Fig. 7E).

Detail of the step of applying the sample solutions onto the carrier as shown in Fig. 7D is explained below. The setup is basically the same as the recording method in a serial ink-jet printer.

While the matrix of the liquid ejection devices is driven in a direction perpendicular to the direction of moving the carrier, wherein the perpendicular direction is referred to as "main driving direction" and the direction of moving the carrier is referred to as "secondary driving direction", each of the solutions in a part of, e.g. one row of the matrix is ejected at each suitable timing for each liquid ejection device comprised of the row to form a part of a matrix of solution spots on the carrier. Next, the carrier is moved a distance of one pitch, for example, of the solution spot matrix in the secondary driving direction so as to be provided the next part of the solution spot matrix by the next row of the liquid ejection device matrix. This cycle is repeated to form the solution post matrix on the carrier. That is, the process of the example is characterized in that the assemblage of liquid ejection devices passes above a carrier plural times to complete the solution spot matrix.

## Claims

1. A liquid ejection device comprising a flow path having an ejection orifice and a pressure chamber communicating with each other; a pressure control assembly for changing the gas pressure in the pressure chamber; and an ejection energy-generating element for giving the energy for ejection of a liquid in the flow path through the orifice to the liquid,
wherein the liquid is introduced through the ejection orifice into the flow path by depressurizing the pressure chamber by the pressure control assembly

2. The liquid ejection device according to claim 1, wherein a chamber for holding the liquid is provided near the ejection orifice, and the energy is applied to the liquid held in the chamber.

3. , The liquid ejection device according to claim 1 or claim 2 wherein the ejection orifice has an orifice diameter ranging from 10 to 80 µm.

4. The liquid ejection device according to any preceding claim.wherein the maximum volume for holding the liquid ranges from 1 to 1000 nL.

5. The liquid ejection device according to any preceding claim wherein the inside wall and the outside wall of the ejection orifice has water-repellency.

6. The liquid ejection device according to any preceding claim wherein the pressure control assembly changes the gas pressure in the pressure chamber by heating.

7. The liquid ejection device according to claim 6, wherein the pressure control assembly is a heater driven by electric pulse.

8. The liquid ejection device according to any one of claims 1 to 5 wherein the pressure oontrol assembly is a Peltier element driven by electric pulse.

9. The liquid ejection device according to any one of claims 2 to 8 wherein the energy is thermal energy.

10. The liquid ejection device according to any preceding claim wherein the ejection energy-generating element is a heater driven by electric pulse.

11. A carrier preparation apparatus comprising:
a liquid ejection device according to any one of claims 1 to 10;
a first driving assembly for driving the pressure control assembly;
a second driving assembly for driving the ejection energy-generating element;
a liquid holding portion for holding the liquid containing a sample;
a carrier holding member for holding a carrier for fixing the sample;
a moving means for moving the ejection orifice in positional relation to the liquid holding portion and the carrier holding member; and
a position control assembly for deciding the position of the ejection orifice in the relative movement.

12. The preparation apparatus according to claim 11, comprising the liquid ejection devices in plurality.

13. A process for preparing a sample carrier employing a liquid ejection device according to any one of claims 1 to 10, the method comprising the steps of:
filling the liquid containing a sample into the flow path by bringing the ejection orifice into contact with the liquid containing the sample;
moving the ejection orifice in positional relation to a carrier for fixing the sample to decide the position of the ejection orifice; and
ejecting the liquid containing the sample from the ejection orifice onto a prescribed position on the carrier to deposit the sample.

14. The process according to claim 13, wherein a plurality of the liquid ejection devices is employed.
